(19)

Europäisches
Patentamt
European
Patent Office
Office européen
des brevets

(11) **EP 2 393 206 A2**

(12) **EUROPEAN PATENT APPLICATION**

(43) Date of publication:
**07.12.2011 Bulletin 2011/49**

(51) Int Cl.:
*H04B 1/04* (2006.01)    *H04B 1/18* (2006.01)

(21) Application number: **11168243.1**

(22) Date of filing: **31.05.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **04.06.2010 US 794231**

(71) Applicant: **Sony Ericsson Mobile
Communications AB
221 88 Lund (SE)**

(72) Inventors:
• **Camp, William O. Jr.**
 **Chapel Hill, NC North Carolina 27514 (US)**
• **Story, David R.**
 **Holly Springs, NC North Carolina 27540 (US)**

(74) Representative: **VALEA AB
Box 7086
103 87 Stockholm (SE)**

(54) **Communications circuitry for an electronic device**

(57)    Communications circuitry (12) includes a controlled antenna tuner (16). The voltage across elements of the antenna tuner may be determined and, if an over-voltage situation is detected, remedial action may be taken. At times when a configuration of the antenna tuner is to be maintained and an over-voltage condition exists, the remedial action may include lowering an output power from a transceiver (30). Another type of remedial action may include introducing a phase shift (46) between an antenna and the antenna tuner. At times when a configuration of the antenna tuner is to be changed and an over-voltage condition exists, the remedial action may include reducing output power of the transceiver. Another type of remedial action may include waiting for an opportune time to change the antenna tuner configuration.

FIG. 4

EP 2 393 206 A2

**Description**

**TECHNICAL FIELD OF THE INVENTION**

The technology of the present disclosure relates generally to portable electronic devices and, more particularly, to communications circuitry for portable electronic devices that has an antenna tuner with over-voltage protection. Protection from over-current conditions also may be present. The communications circuitry is used for wireless communications between the electronic device and a communications system.

**BACKGROUND**

Mobile electronic devices, such as mobile telephones, have radiated performance requirements. For instance, the device may have an expected total radiated power (TRP) and an expected total integrated sensitivity (TIS). But as electronic devices become smaller, these requirements are more difficult to meet. In addition, electronic devices are trending toward supporting communications over a wider range of frequencies and communications protocols, and to use multiple input multiple output (MIMO) antenna/transceiver configurations. As such, the need for antenna volume is increasing. Therefore, device form factor and radio performance are competing factors in the design and development of mobile electronic devices.

**SUMMARY**

To improve the radio performance of mobile electronic devices, the present disclosure describes communications circuitry that includes a controlled antenna tuner. The voltage across elements of the antenna tuner may be determined and, if an over-voltage situation is detected, remedial action may be taken. At times when a configuration of the antenna tuner is to be maintained and an over-voltage condition exists, the remedial action may include lowering an output power from a transceiver. Another type of remedial action may include introducing a phase shift between an antenna and the antenna tuner. At times when a configuration of the antenna tuner is to be changed (e.g., to match a change in antenna load or to support a change in frequencies) and an over-voltage condition exists, the remedial action may include reducing output power of the transceiver. Reducing power in this situation may include temporarily turning the transceiver off. Another type of remedial action may include waiting for an opportune time to change the antenna tuner configuration.

According to one aspect of the disclosure, a communications circuit assembly for an electronic device through which the electronic device establishes wireless communications with a communications network includes a transceiver; an antenna assembly; an antenna tuner that operatively couples the transceiver and the antenna assembly; and a controller configured to control the antenna tuner by outputting tuner control data and to control output power from the transceiver, wherein the controller is further configured to determine voltage across each of plural switchable components of the antenna tuner; compare the determined voltage across each switchable component with a threshold voltage for the component; and if the determined voltage across any one switchable component exceeds the corresponding threshold, undertake remedial action.

According to one embodiment of the communications circuit assembly, the voltage across each of the switchable components is determined using circuit analysis calculations for a current configuration of the antenna tuner and a current output power value for the transceiver.

According to one embodiment of the communications circuit assembly, if a configuration of the antenna tuner is to be maintained to match a load of the antenna assembly, the remedial action includes reducing output power from the transceiver.

According to one embodiment of the communications circuit assembly, the output power is reduced to a predetermined value for the current configuration of the antenna tuner.

According to one embodiment of the communications circuit assembly, the output power is incrementally reduced until the voltage that exceeded the corresponding threshold no longer exceeds the corresponding threshold.

According to one embodiment of the communications circuit assembly, the output power is reduced to a value that is calculated by the controller so that none of the thresholds for the switchable components are exceeded.

According to one embodiment of the communications circuit assembly, the remedial action is to switch a phase shift into a transmission line between the antenna assembly and the antenna tuner.

According to one embodiment of the communications circuit assembly, if a configuration of the antenna tuner is to be changed, the remedial action includes reducing output power from the transceiver and then controlling the antenna tuner to change configuration.

According to one embodiment of the communications circuit assembly, if a configuration of the antenna tuner is to be changed, the remedial action includes waiting for a time in a communications protocol under which the transceiver is operating for a condition when the transceiver output power is reduced by operation of the protocol and then controlling the antenna tuner to change configuration.

According to one embodiment of the communications circuit assembly, each compared threshold voltage is a first threshold voltage if a configuration of the antenna tuner is to be maintained and is a second threshold voltage if a configuration of the antenna tuner is to be changed.

According to another aspect of the disclosure, a method of tuning an antenna assembly from a communications circuit assembly for an electronic device through which the electronic device establishes wireless communications with a communications network includes operatively coupling a transceiver and the antenna assembly with an antenna tuner; controlling a configuration of switchable components of the tuner by outputting tuner control data with a controller; controlling an output power level of the transceiver with the controller; determining voltage across each of the switchable components of the antenna tuner; comparing the determined voltage across each switchable component with a threshold voltage for the component; and if the determined voltage across any one switchable component exceeds the corresponding threshold, undertaking remedial action.

According to one embodiment of the method, the voltage across each of the switchable components is determined using circuit analysis calculations for a current configuration of the antenna tuner and a current output power value for the transceiver.

According to one embodiment of the method, if a configuration of the antenna tuner is to be maintained to match a load of the antenna assembly, the remedial action includes reducing output power from the transceiver.

According to one embodiment of the method, the output power is reduced to a predetermined value for the current configuration of the antenna tuner.

According to one embodiment of the method, the output power is incrementally reduced until the voltage that exceeded the corresponding threshold no longer exceeds the corresponding threshold.

According to one embodiment of the method, the output power is reduced to a value that is calculated by the controller so that none of the thresholds for the switchable components are exceeded.

According to one embodiment of the method, the remedial action is to switch a phase shift into a transmission line between the antenna assembly and the antenna tuner.

According to one embodiment of the method, if a configuration of the antenna tuner is to be changed, the remedial action includes reducing output power from the transceiver and then controlling the antenna tuner to change configuration.

According to one embodiment of the method, if a configuration of the antenna tuner is to be changed, the remedial action includes waiting for a time in a communications protocol under which the transceiver is operating for a condition when the transceiver output power is reduced by operation of the protocol and then controlling the antenna tuner to change configuration.

According to another aspect of the disclosure, a communications circuit assembly for an electronic device through which the electronic device establishes wireless communications with a communications network includes a transceiver; an antenna assembly; an antenna tuner that operatively couples the transceiver and the antenna assembly; and a controller configured to control the antenna tuner by outputting tuner control data and to control output power from the transceiver, wherein the controller is further configured to determine current through each of plural switchable components of the antenna tuner; compare the determined current through each switchable component with a threshold current for the component; and if the determined current through any one switchable component exceeds the corresponding threshold, undertake remedial action.

These and further features will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the scope of the claims appended hereto.

**BRIEF DESCRIPTION OF THE DRAWINGS**

FIG. 1A is a front view of a representative electronic device in the form of a mobile telephone, the mobile telephone being a slider phone in a closed state;

FIG. 1B is a front view of the mobile phone of FIG. 1A in an open state;

FIG. 2 is a schematic block diagram of an exemplary embodiment of operative communications circuitry of the mobile phone in accordance with various aspects of the disclosure;

FIG. 3 is a simplified electrical schematic of an antenna tuner for the communications circuitry;

FIG. 4 is a schematic block diagram of another exemplary embodiment of operative communications circuitry of the mobile phone in accordance with various aspects of the disclosure; and

FIG. 5 is a flow chart representing an exemplary method of antenna tuning using the communications circuitry.

## DETAILED DESCRIPTION OF EMBODIMENTS

Embodiments will now be described with reference to the drawings, wherein like reference numerals are used to refer to like elements throughout. It will be understood that the figures are not necessarily to scale. Features that are described and/or illustrated with respect to one embodiment may be used in the same way or in a similar way in one or more other embodiments and/or in combination with or instead of the features of the other embodiments.

In the present document, embodiments are described primarily in the context of a portable radio communications device, such as the illustrated mobile telephone. It will be appreciated, however, that the exemplary context of a mobile telephone is not the only operational environment in which aspects of the disclosed systems and methods may be used. Therefore, the techniques described in this document may be applied to any type of appropriate electronic device, examples of which include a mobile telephone, a media player, a gaming device, a computer, a pager, a communicator, an electronic organizer, a personal digital assistant (PDA), a portable communication apparatus, etc.

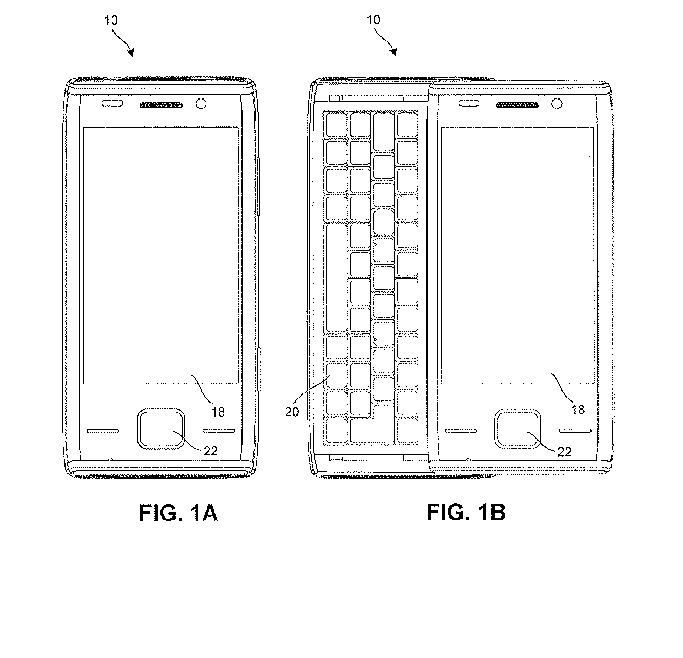

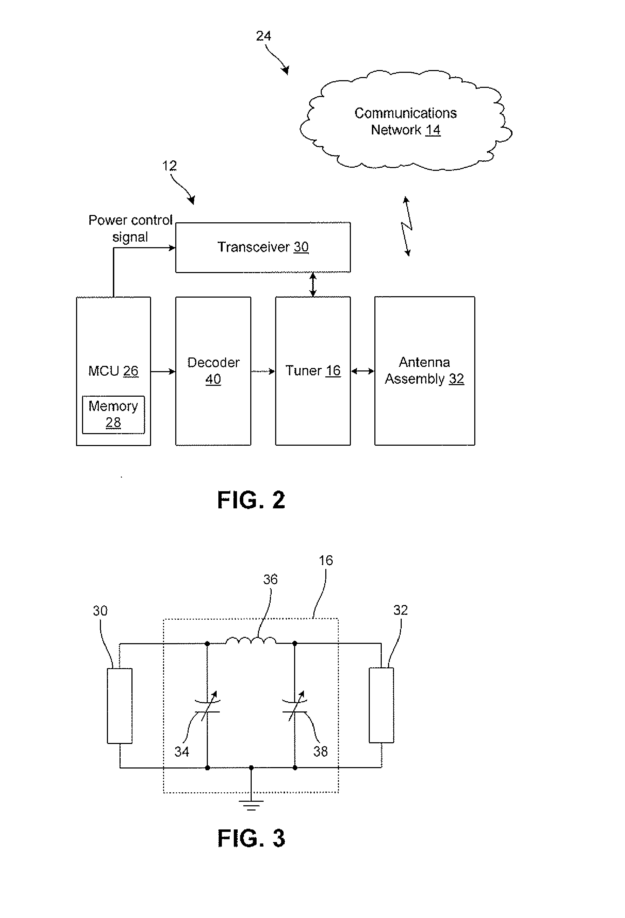

Referring initially to FIGs. 1A and 1B, an electronic device 10 is shown. The illustrated electronic device 10 is a mobile telephone. With additional reference to FIG. 2, the electronic device 10 includes communications circuitry 12 that enables the electronic device 10 to establish wireless communications with a communications network 14. The communication circuitry 12 may alternatively be referred to as a communication circuit assembly 12. As will be described in greater detail, the communications circuitry 12 allows for antenna tuning as well as over-voltage and/or over-current protection for elements of an antenna tuner 16. The functionality to support antenna tuning may be partially embodied in executable instructions (e.g., code) that is resident in and executed by the electronic device 10. In one embodiment, the executable instructions may be one or more programs that are stored on a computer readable medium.

Also, through the following description, exemplary techniques for communications circuitry 12 control are described. It will be appreciated that through the description of the exemplary techniques, a description of steps that may be carried out in part by executing software is described. Although a computer program listing is omitted for the sake of brevity, the described steps may be considered a method that the corresponding device is configured to carry out. While the described steps are implemented in software in accordance with an embodiment, such functionality could also be carried out via dedicated hardware or firmware, or some combination of hardware, firmware and/or software.

The electronic device 10 may include a display 18 to display information to a user. A keypad 20, a navigation input 22, and/or touch sensitive functionality of the display 18 may allow for a variety of user input operations.

The electronic device 10 is shown as having a "slider" type form factor where an upper portion of the electronic device 10 may be slid open relative to a lower portion of the electronic device 10. Therefore, the electronic device 10 may have two physical states, including an open state and a closed state. It will be appreciated that the illustration of a slider type form factor is exemplary. Other exemplary form factors include a "brick" or "block" form factor housing that has only one physical state. Another exemplary form factor is a flip-open, or "clamshell," form factor that has an open physical state and a closed physical state. Yet another exemplary form factor may include a pivoting housing component. Combinations of these form factor types may be combined to result in even more possible physical states of the electronic device 10.

As indicated, the electronic device may be configured to operate as part of a mobile communications system 24 when in operative communication with the communications network 14. In the embodiment of the mobile telephone, the communication circuitry 12 may be configured for interaction with a mobile radio network, such as global system for mobile communications (GSM) and/or wideband code division multiple access (WCDMA). Of course, the communications circuitry 12 may support additional or alternative standards, such as general packet radio service (GPRS), WiFi (e.g., a network compatible with IEEE 802.11), WiMAX (e.g., a network compatible with IEEE 802.16), integrated services digital broadcasting (ISDB), high speed packet access (HSPA), or any other appropriate standard. Since the electronic device 10 may be capable of communicating using more than one standard, the illustrated components of the communications circuitry 12 represent the hardware and functionality for each desired standard (e.g., there may be one or more than one radio transceiver and/or antenna as part of the communications circuitry 12).

The communications network 14 may include one or more servers (not illustrated) for managing calls placed by and destined to the electronic device 10, transmitting data to and receiving data from the electronic device 10, and carrying out any other support functions. The server and/or other components of the communications network 14 may communicate with the electronic device 10 via a transmission medium. The transmission medium may be any appropriate device or assembly, including, for example, a communications base station (e.g., a cellular service tower, or "cell" tower), a wireless access point, a satellite, etc. The network 14 may support the communications activity of multiple electronic devices 10 and other types of end user devices. As will be appreciated, servers of the network 14 may be configured as a typical computer system used to carry out server functions and may include a processor configured to execute software containing logical instructions that embody the functions of the server and a memory to store such software. In alternative arrangements, the electronic device 10 may wirelessly communicate directly with another electronic device 10 (e.g., another mobile telephone or a computer) through a local network or without an intervening network.

The communications circuitry 12 enables the electronic device 10 to establish communications with another device. Communications may include calls, data transfers, and the like. Calls may take any suitable form such as, but not limited to, voice calls and video calls. The calls may be carried out over a cellular circuit-switched network or may be in the form of a voice over Internet Protocol (VoIP) call that is established over a packet-switched capability of a cellular network or over an alternative packet-switched network, for example. Data transfers may include, but are not limited to, receiving streaming content (e.g., streaming audio, streaming video, etc.), receiving data feeds (e.g., pushed data, podcasts, really simple syndication (RSS) data feeds), downloading and/or uploading data (e.g., image files, video files, audio files, ring tones, Internet content, etc.), receiving or sending messages (e.g., text messages, instant messages, electronic mail messages, multimedia messages), and so forth. This data may be processed by the electronic device 10, including storing the data in a memory (not shown), executing applications with a processor (not shown) to allow user interaction with the data, displaying video and/or image content associated with the data, outputting audio sounds associated with the data, and so forth.

The electronic device 10 may include a primary control circuit (not shown) that is configured to carry out overall control of the functions and operations of the electronic device 10. The control circuit may include a processing device, such as a central processing unit (CPU), a microcontroller, or a microprocessor. The processing device executes code stored in a memory (not shown) within the control circuit and/or in a separate memory in order to carry out operation of the electronic device 10. For instance, the memory may store executable code that embodies the various communications circuitry 12 control functions and the processing device may execute that code.

In one embodiment, the communication circuitry 12 may include a controller in the form of a processing device, such as the illustrated microcontroller unit (MCU) 26. The MCU 26 may be same as the processing device of the primary control circuit or a separate processing device. In the event that the MCU 26 is separate, the code that implements the communications circuitry 12 control may be stored by a memory 28 of the MCU 26 or in a separate memory. Also, the code may be completely executed by the MCU 26, or executed in part by the MCU 26 and executed in part by the processing device of the primary control circuit.

Memory separate from the MCU 26 and/or the processing device of the primary control circuit may be, for example, one or more of a buffer, a flash memory, a hard drive, a removable media, a volatile memory, a non-volatile memory, a random access memory (RAM), or other suitable device. In a typical arrangement, the memory may include a non-volatile memory for long term data storage and a volatile memory that functions as system memory for the processing device(s). The memory may exchange data with the primary control circuit and/or MCU 26 over a data bus. Accompanying control lines and an address bus also may be present. In one embodiment, the MCU 26 may be configured to communicate with other internal components of the electronic device 10 (e.g., to receive data input). These internal communications may be made over inter-integrated circuit (I2C) communication lines, for example.

The electronic device 10 further includes other components to carry out the various functions of the device. For instance, a sound signal processing circuit (not shown) may be used in conjunction with a speaker (not shown) and a microphone (not shown) for carrying out voice communications and playing audio to a user. A video processing circuit (not shown) may be used to drive the display 18. Input/output (I/O) interface(s) (not shown) may be used to electrically connect the electronic device to another device (e.g., a computer), an accessory (e.g., a personal handsfree (PHF) device), and/or a power source.

A camera (not shown) may be present for taking digital pictures and/or movies.

Image and/or video files corresponding to the pictures and/or movies may be stored in the memory. A position data receiver (not shown), such as a global positioning system (GPS) receiver, may be involved in determining the location of the electronic device 10. A local transceiver (not shown) may be present to establish communication with a nearby device, such as an accessory (e.g., a PHF device), another mobile radio terminal, a computer or another device. In one embodiment, the local transceiver is separate from the communication circuitry 12. For instance, the local transceiver may be a Bluetooth chipset.

With continuing reference to FIG. 2, the communication circuitry 12 may include a transceiver 30 that is operatively coupled to an antenna assembly 32 through a tuning network of the antenna tuner 16. The antenna assembly 32 may include one or more antennas and the transceiver 30 may include one or more radio frequency (RF) transmitters and one or more RF receivers. The tuner 16 may be implemented with an array of switchable micro electro-mechanical system (MEMS) capacitors that selectively couple RF lines between the transceiver 30 and the antenna assembly 32 to varying capacitive loads that implement antenna tuning. For instance each MEMS capacitor may have a high capacitance state (e.g., about 10 picofarads, or pF) and a low capacitive state (e.g., about 1 pF). The MEMS capacitors may be arrayed, in parallel and in series, such that their states may be arranged to cover a desired range of impedance transformation and with a desired degree of impedance resolution. In other embodiments, the tuner 16 may include an array of capacitors (e.g., barium strontium titanate (BST) capacitors) and switches that are toggled to achieve a desired capacitance.

With additional reference to FIG. 3, an electrical schematic of the antenna tuner 16 is shown with loads corresponding to the transceiver 30 and the antenna assembly 32. The antenna tuner 16 may be arranged as a Pi-section filter with a shunt input capacitor 34, a series inductor 36, and a shunt output capacitor 38. Each of the shunt input capacitor 34 and the shunt output capacitor 38 may be implemented with an array of capacitors as just described to achieve variability respectively to the capacitance of the input capacitor 34 and the output capacitor 38.

The MCU 26 may output tuner control data upon which the MEMS capacitors in the tuner 16 are set. For example, the control data may be input to a decoder 40 that decodes the control data. The control data may be, for example, a 16 bit output from the MCU 26. The control data is decoded by the decoder 40 into individual MEMS capacitor setting (or switch) control signals. It will be appreciated that the arrows representing signal flow in the appended figures each may represent one or more data lines. For instance, each bit of control data from the MCU 26 may have a corresponding data line to the decoder 40.

A transmit power sensor (not shown) may detect transmitted power from the antenna assembly 32. The sensed transmit power, also referred to as forward power, may be input to the MCU 26 in the form of an analog DC signal. An analog to digital (A/D) converter (not shown) of the MCU 26 may convert the forward power signal into a digital value for processing. A reflected power sensor (not shown) may detect reflected power at the antenna assembly 32. The sensed reflected power, also referred to as reverse power, may be input to the MCU 26 in the form of an analog DC signal. An A/D converter (not shown) of the MCU 26 may convert the reverse power signal into a digital value for processing.

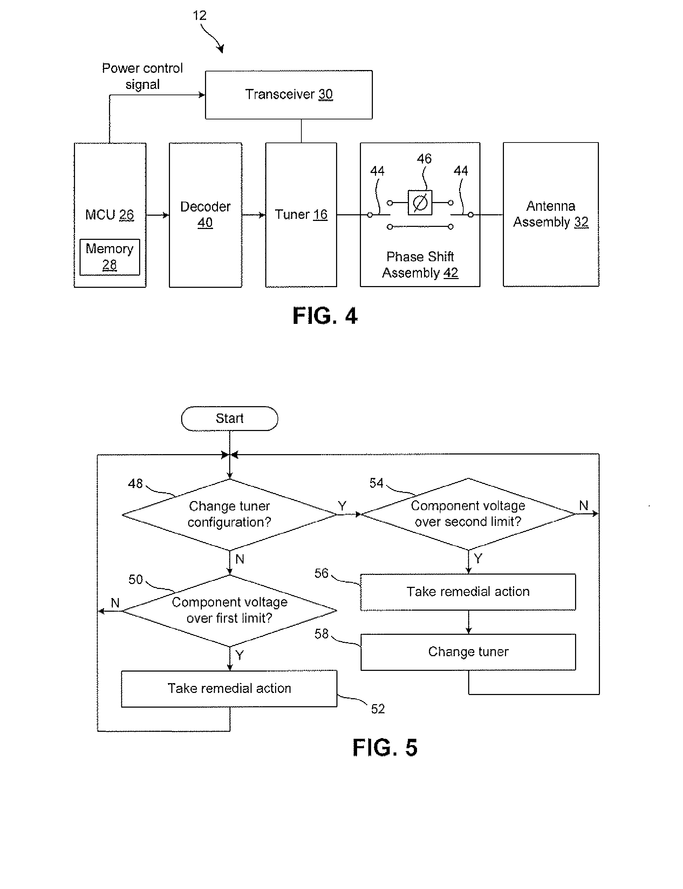

With additional reference to FIG. 4, another embodiment of the communications circuitry 12 is shown. In this embodiment, a phase shift assembly 42 is present in series between the tuner 16 and the antenna assembly 32. The phase shift assembly 42 of the illustrated embodiment as two states, including a first state in which no phase shift is introduced and a second state in which a phase shift of 180 degrees is introduced. To achieve the second state, switches 44 may be set to place a phase shifter 46 in the pathway between the tuner 16 and the antenna assembly 32. The phase shifter 46 may be implemented with a transmission line of appropriate length and/or with reactive components. To achieve the first state, the switches 44 may be set to bypass the phase shifter 46.

The values of capacitors 34 and 38 of the antenna tuner 16 may be changed under the control of the MCU 26 so that maximum power is transferred between the transceiver 30 and the antenna assembly 32. In some embodiments, the value of the inductor 36 also may be variable under the control of the MCU 26, but for purposes of this description the inductor 36 will be assumed to have a fixed value. In one embodiment, the antenna assembly 32 may have an ideal impedance of 50 ohms ($\Omega$). But if the antenna impedance deviates from the ideal impedance, the tuner 16 may be adjusted so that transceiver 30 "sees" the ideal impedance. The antenna tuner 16, therefore, may be considered a filter network where the termination on the transceiver 30 side is the desired ideal impedance and the termination on the antenna side is matched to the impedance of the antenna assembly 32, which may not be the ideal impedance, The individual capacitive elements in the capacitors 34 and 38 may be varied to achieve the match between the actual, non-ideal antenna impedance and the desired, ideal transceiver-side impedance. The impedance of the antenna assembly 32 may deviate from the ideal impedance based on loading of the antenna assembly 32, for example. Loading on the antenna assembly 32 may vary with the presence or absence of nearby objects, such as other electronics, a hand or head of a user, a car seat or other surface upon which the electronic device 10 rests, etc. Loading on the antenna assembly 32 also may vary with changes in configuration of the electronic device 10, such as opening or closing the slider of the illustrated embodiment. The antenna tuner 16 also may be adjusted to support changes in operational frequency of the communications circuitry 12.

In one embodiment, the output power from the transceiver 30 may be controlled by the MCU 26. For instance, the MCU 26 may input a power out control signal to a power amplifier in the transceiver 30.

With additional reference to FIG. 5, illustrated are logical operations to implement an exemplary method of controlling the communications circuitry 12. The flow chart of FIG. 5 may be thought of as depicting steps of a method carried out by the electronic device 10. Although FIG. 5 shows a specific order of executing functional logic blocks, the order of executing the blocks may be changed relative to the order shown. Also, two or more blocks shown in succession may be executed concurrently or with partial concurrence. Certain blocks also may be omitted. Although shown as a logical progression, the logical flow of FIG. 5 may be implemented in an object-oriented manner.

The logical flow may start in block 48 where a determination may be as to whether the current configuration of the tuner 16 should be altered by switching any of the switchable elements of the tuner 16. This determination may be made in any suitable manner for tunable antennas as is suitable for the electronic device 10. The switchable elements may be referred to as switchable components. In one embodiment, the tuning technique for the antenna assembly 32 is implemented using a hybrid tuning approach to control the tuning in a closed loop mode or in an open loop mode, depending on the current operation of the electronic device 10. Additional description of this tuning approach is described in detail in U.S. Patent Application No. 12/621,549, filed November 9, 2009, and titled COMMUNICATIONS CIRCUITRY FOR AN ELECTRONIC DEVICE, the disclosure of which is incorporated herein by reference in its entirety.

If a negative determination is made in block 48, then the configuration of tuner 16 elements will be maintained in their current state. Following a negative determination in block 48, the logical flow may proceed to block 50 where a determination is made as to whether the voltage across any of the components of tuner 16 exceeds a first voltage threshold for the component. The first voltage threshold, for each component, corresponds to a voltage that may cause the component to change states, thereby resulting in a mismatch to the impedance of the antenna assembly 32.

The determination may be made by determining the voltage across each component of interest. For example, a determination of the voltage across the input capacitor 34 as a whole and the voltage across the output capacitor 38 as a whole may be made. Alternatively, the voltages across each of the individual switchable capacitor that make up the input capacitor 34 and the output capacitor 38 may be determined. Each of the determined voltages may be compared to a corresponding predetermined voltage threshold for the corresponding component. If any one voltage threshold is exceeded, a positive determination may be made in block 50.

When the impedance of the antenna assembly 32 deviates from the ideal impedance by a relatively large amount (e.g., a large deviation from 50 ohms), the antenna assembly 32 may have a relatively high voltage standing wave ratio (VSWR). The likelihood that one or more of the passive components in the antenna tuner 16 will exceed the corresponding first voltage threshold(s) increases with increases in VSWR. High VSWR conditions also may lead to relatively high current passing through one or more of the passive components. It is under these conditions that the antenna tuner 16 performance and/or reliability of the component(s) are most likely to be compromised.

The voltage across and/or the current through each component of the tuner 16 may be determined. Since the MCU 26 sets the tuner 16 configuration, the configuration of each of the switchable elements in the tuner 16 may be known to the MCU 26. In addition, the output power of the transceiver 30 also is known by the MCU 26. Also known may be the antenna load, including the real and imaginary components of the impedance of the antenna assembly 32 as well as the VSWR of the antenna load.

Knowing this information, the MCU 24 may calculate the voltage and/or current for each reactive element of the antenna tuner 16 and compare the calculated values to the corresponding predetermined first thresholds for each element. The calculations may be made using basic circuit analysis techniques. If the antenna load and transceiver source load both have ideal impedance (e.g., 50 ohms), then the input and output capacitor values are the same and resonate with the inductor at the frequency of operation. In this case, the voltages across the load and source will be equal to that required to satisfy the relationship of equation 1.

$$Power\ Out = \frac{(Peak\ Voltage)^2}{2(Load\ Resistance)} \qquad \text{Eq. 1}$$

As an example, if the ideal antenna load is 50 ohms, but deviates to 200 ohms and the capacitors 34 and 38 of the antenna tuner 16 are adjusted to match the 50 ohm source impedance to the 200 ohm antenna impedance, then the peak voltage on the output capacitor 38 will be twice the previous value as determined by the above formula when the antenna load is 50 ohms. Using the known configuration of the capacitors 34 and 38 and the known power output from the transceiver 30, the MCU 26 may calculate individual voltages and/or currents for each capacitive element in the capacitors 34 and 38.

As indicated, if any one or more of the first voltage thresholds is exceeded, a positive determination may be made in block 50. Then, in block 52, remedial action may be made to reduce the voltage across the effected component. In one embodiment, the remedial action may include reducing the output power from the transceiver 30 under the control of the MCU 26. A new output power may be determined by stepping the output power down in increments until none of the first voltage thresholds are exceeded.

In another approach, the new output power may be determined by calculation. The calculation may take an iterative approach to logically step the output power down in increments until mathematical calculation shows that none of the first voltage thresholds would be exceeded. Then the MCU 26 may control the output power to match the calculated output power that brings all calculated voltages for the components of the tuner 16 to below the respective thresholds. The calculation may alternatively take a closed form approach. In a closed form approach, a predetermined calculation technique may be employed for a given condition, such as voltage value that exceeds the corresponding threshold, load value, and/or antenna configuration. For example, if the voltage across the component is twice the corresponding threshold, then the power may be reduced by thirty percent.

In still another approach, a look-up table may be stored by the memory 28 and accessed by the MCU 26. The look-up table may be established specifically for the electronic device 10 by calibration at the time of manufacture of the electronic device 10. Alternatively, the look-up table may be established by engineering design for the model of the electronic device 10. The look-up table may specify a maximum output power level for the transceiver 30 for each possible configuration of the antenna tuner 16.

Another type of remedial action is to introduce a phase shift between the tuner 16 and the antenna assembly 32. This may be accomplished by switching the phase shift assembly 42 from the first state in which no phase shift is introduced to the second state in which a phase shift of 180 degrees is introduced. In some circumstances, the phase shift may be employed in conjunction with a reduction in power output or, if circumstances permit, the phase shift may be employed in conjunction with an increase in power output. Adjustments to accommodate the phase shift may be made in the transceiver 30.

Shifting the phase in this manner may have two positive effects. First, it may be easier to match the antenna impedance in the presence of high VSWR. For example, the antenna tuner 16 may be constructed to match at least some phase angles of high VSWR values of the antenna assembly. And, for the phase angles that are not covered by the antenna tuner 16, the phase shift 46 may be used to shift the phase of the high VSWR mismatch into a more favorable phase region of the corresponding Smith chart. That is, the phase shift may lower the real part of the impedance of the antenna assembly 32.

Second, the phase shift may reduce the voltage across and/or current through components of the antenna tuner 16. Therefore, the phase shift may be used to lower a voltage that exceeds the corresponding first threshold value.

Following block 52 or following a negative determination in block 50, the logical flow may return to block 48. If, in block 48, the configuration of the tuner 16 is to be changed, the logical flow may proceed to block 54.

If the voltage across one of the capacitive switching elements in the antenna tuner 16 is above a second voltage threshold, it is possible that the capacitive switching element may not switch states when commanded. This is because the inertia of the capacitive switching element to stay in one position may be increased by the voltage present across the capacitive switching element. This condition may be detected in block 54 by determining if the voltage across any of the components of tuner 16 exceeds a second voltage threshold for the component. The second voltage threshold for each component will typically be lower than the first voltage threshold for each component. But the determination of block 54 may be made in the same manner as the determination of block 50. For example, using the known configuration of the elements of the tuner 16 and the known output power of the transceiver 30, calculations may be made to determine the voltage across and/or the current through each component of interest. Then, the calculated values may be compared against predetermined second voltage thresholds to determine if any of the second voltage thresholds are exceeded.

The capacitive switching elements may be asymmetrical. Therefore, in an "up" state, the threshold voltage for block 54 may be different than a threshold voltage for block 54 when the capacitive switching element is in a "down" state. In one embodiment, two sets of second threshold voltages are maintained, one for the up state and one for the down state. Then, in the comparison of block 54, the appropriate second threshold voltage is used depending on the state of the capacitive switching element undergoing analysis. But, for simplicity of implementation and because the asymmetry is often negligible, one threshold voltage for both states may be employed.

If a positive determination is made in block 54, the logical flow may proceed to block 56 where remedial action may be taken. In one embodiment, the remedial action is to intentionally reduce the power output of the transceiver 30 using commands from the MCU 26 to the transceiver 30. The power may be reduced in the manner of block 52 so as to reduce the power to just enough so that the second threshold voltage is not exceeded. Alternatively, the power may be reduced by a predetermined amount (e.g., measured in watts or milliwatts) from its current value, may be reduced by a predetermined percentage of its current value, may be reduced to a predetermined value, or may be reduced to a predetermined value for the current configuration of the tuner 16. Reducing the power level to a predetermined value may include outputting no power or minimal power, such as by switching the transceiver (or operative components therein) to an off state. Reducing the power output of the transceiver will reduce the voltage across the element that had a voltage that exceeded the corresponding second threshold voltage, and allow changing of the configuration of the tuner 16. The reduction in power may be temporary, and made long enough to effectuate changing the configuration of the tuner in block 58.

In another embodiment, the remedial action of block 58 may be to wait for an opportune time to change the configuration of the antenna tuner 16. An opportune time may be when a condition exists where it is known that the output power of the transceiver will be relatively low or the transceiver is off such that there is a high likelihood that the voltage across each capacitive switching element will be below the respective second threshold voltage. If operating under WCDMA, an exemplary opportune time may be during an uplink compressed mode cycle or periods of time when the innerloop power control brings the power level down to or below a predetermined level that is known or determined to allow tuner reconfiguration away from the current configuration of the antenna tuner 16. If operating under GSM, an exemplary opportune time may be during an interpulse period. The remedial action of waiting may result in not interrupting normal uplink transmitter operation to reconfigure the antenna tuner 16.

In still another embodiment, the remedial action of block 58 may be to switch the phase shift 46 into the transmission line between the tuner 16 and the antenna assembly 32. The phase shift 46 may be bypassed once the change in antenna tuner 16 configuration is made.

Following block 58 or a negative determination in block 54, the logical flow may return to block 48.

The foregoing description of FIG. 5 concentrates on conditions when a voltage across an element of the antenna tuner 16 exceeds one of two thresholds. It will be appreciated that the techniques may be equally carried out to monitor for and correct conditions when current through an element of the antenna tuner 16 exceeds corresponding first and second current thresholds for the element.

Although certain embodiments have been shown and described, it is understood that equivalents and modifications falling within the scope of the appended claims will occur to others who are skilled in the art upon the reading and understanding of this specification.

**Claims**

1. A communications circuit assembly (12) for an electronic device (10) through which the electronic device establishes wireless communications with a communications network (14), comprising:

   a transceiver (30);
   an antenna assembly (32);
   an antenna tuner (16) that operatively couples the transceiver (30) and the antenna assembly (32); and
   a controller (26) configured to control the antenna tuner (16) by outputting tuner control data and to control output power from the transceiver (30), wherein the controller is further configured to:

      determine voltage across each of plural switchable components of the antenna tuner (16);
      compare the determined voltage across each switchable component with a threshold voltage for the component; and
      if the determined voltage across any one switchable component exceeds the corresponding threshold, undertake remedial action.

2. The communications circuit assembly (12) of claim 1, wherein the voltage across each of the switchable components is determined using circuit analysis calculations for a current configuration of the antenna tuner (16) and a current output power value for the transceiver (30).

3. The communications circuit assembly (12) of any one of claims 1-2,
   wherein if a configuration of the antenna tuner (16) is to be maintained to match a load of the antenna assembly (32), the remedial action includes reducing output power from the transceiver (30).

4. The communications circuit assembly (12) of claim 3, wherein the output power is one of: reduced to a predetermined value for the current configuration of the antenna tuner (16); incrementally reduced until the voltage that exceeded the corresponding threshold no longer exceeds the corresponding threshold; or reduced to a value that is calculated by the controller so that none of the thresholds for the switchable components are exceeded.

5. The communications circuit assembly (12) of any one of claims 1-4,
   wherein the remedial action is to switch a phase shift (46) into a transmission line between the antenna assembly (32) and the antenna tuner (16).

6. The communications circuit assembly (12) of any one of claims 1-5,
   wherein if a configuration of the antenna tuner (16) is to be changed, the remedial action includes reducing output power from the transceiver (30) and then controlling the antenna tuner (16) to change configuration.

7. The communications circuit assembly (12) of any one of claims 1-6,
   wherein if a configuration of the antenna tuner (16) is to be changed, the remedial action includes waiting for a time in a communications protocol under which the transceiver (30) is operating for a condition when the transceiver (30) output power is reduced by operation of the protocol and then controlling the antenna tuner (16) to change configuration.

8. The communications circuit assembly (12) of any one of claims 1-7,

wherein each compared threshold voltage is a first threshold voltage if a configuration of the antenna tuner (16) is to be maintained and is a second threshold voltage if a configuration of the antenna tuner (16) is to be changed.

9. A method of tuning an antenna assembly (32) from a communications circuit assembly (12) for an electronic device (10) through which the electronic device establishes wireless communications with a communications network (14), comprising:

operatively coupling a transceiver (30) and the antenna assembly (32) with an antenna tuner (16);
controlling a configuration of switchable components of the tuner (16) by outputting tuner control data with a controller;
controlling an output power level of the transceiver (30) with the controller;
determining voltage across each of the switchable components of the antenna tuner (16);
comparing the determined voltage across each switchable component with a threshold voltage for the component; and
if the determined voltage across any one switchable component exceeds the corresponding threshold, undertaking remedial action.

10. The method of claim 9, wherein the voltage across each of the switchable components is determined using circuit analysis calculations for a current configuration of the antenna tuner (16) and a current output power value for the transceiver (30).

11. The method of any one of claims 9-10, wherein if a configuration of the antenna tuner (16) is to be maintained to match a load of the antenna assembly (32), the remedial action includes reducing output power from the transceiver (30).

12. The method of claim 11, wherein the output power is one of: reduced to a predetermined value for the current configuration of the antenna tuner (16); incrementally reduced until the voltage that exceeded the corresponding threshold no longer exceeds the corresponding threshold; or reduced to a value that is calculated by the controller so that none of the thresholds for the switchable components are exceeded.

13. The method of any one of claims 9-12, wherein the remedial action is to switch a phase shift (46) into a transmission line between the antenna assembly (32) and the antenna tuner (16).

14. The method of any one of claims 9-13, wherein if a configuration of the antenna tuner (16) is to be changed, the remedial action includes reducing output power from the transceiver (30) and then controlling the antenna tuner (16) to change configuration.

15. The method of any one of claims 9-14, wherein if a configuration of the antenna tuner (16) is to be changed, the remedial action includes waiting for a time in a communications protocol under which the transceiver (30) is operating for a condition when the transceiver (30) output power is reduced by operation of the protocol and then controlling the antenna tuner (16) to change configuration.

FIG. 1A                    FIG. 1B

24

Communications
Network 14

12

Power control
signal

Transceiver 30

MCU 26

Memory
28

Decoder
40

Tuner 16

Antenna
Assembly 32

**FIG. 2**

16

36

30

32

34

38

**FIG. 3**

**FIG. 4**

**FIG. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62154909 A